# FASCICULE DE BREVET EUROPEEN

(11) **EP 4 249 693 B1**
(45) Date de publication et mention de la délivrance du brevet: **26.06.2024**
(21) Numéro de dépôt: 23162543.5
(22) Date de dépôt: 17.03.2023
(51) Int. Cl.: E04B 2/18, E04H 7/28, A01F 25/16, E04H 7/22

(54) **SILO COULOIR CONSTRUIT À PARTIR DE BLOCS DE CONSTRUCTION EMPILABLES**
KORRETT AUS STAPELBAREN BAUSTEINEN
CORRIDOR SILO CONSTRUCTED FROM STACKABLE BUILDING BLOCKS

(30) Priorité: 21.03.2022 BE 202205197
(43) Date de publication de la demande: 27.09.2023
(73) Titulaire: Cobefa Srl, 7780 Comines (BE)
(72) Inventeur: DECOCK, Jeroen, 7780 Comines (BE)
(74) Mandataire: Chielens, Kristof

(56) Documents cités:
- AU-B2- 423 407
- DE-U1- 9 318 930
- DE-U1-202013 102 699
- FR-A- 1 264 628

## Description

D'une part, la présente invention concerne un silo couloir comprenant des blocs de construction conçus pour la formation d'une paroi du silo couloir, lesdits blocs de construction comprenant un corps creux en forme de bloc, pourvu d'une paroi avant, d'une paroi arrière et de deux parois latérales opposées l'une à l'autre. Le silo couloir selon l'invention comprend de préférence au moins une paroi de silo couloir construite à partir de blocs de construction empilables présentant les caractéristiques spécifiques telles que décrites dans les revendications du brevet et les paragraphes pertinents du présent fascicule de brevet. Plus particulièrement, le silo couloir selon l'invention comprend deux parois de silo couloir placées l'une en face de l'autre, chaque paroi étant construite à partir de blocs de construction empilables présentant les caractéristiques spécifiques telles que décrites dans les revendications du brevet et les paragraphes pertinents du présent fascicule de brevet.

D'autre part, la présente invention concerne l'utilisation des blocs de construction concernés pour la formation d'une paroi de silo couloir.

Le stockage d'aliments pour bétail, en particulier les aliments pour bétail compactés tels que le fourrage ensilé, dans ce qu'on appelle des silos couloir, afin qu'ils soient disponibles en hiver pour l'alimentation des ruminants (par exemple les bovins ou les moutons) ou sous forme de biocarburant pour les fermenteurs anaérobies, est connu. Le fourrage ensilé (maïs, herbe) est collecté couche par couche dans le silo (couloir) et compacté, par exemple par le passage d'un tracteur. Pour une conservation optimale, l'aliment brut doit être ensilé de manière étanche à l'air (fermentation pauvre en oxygène).

Un silo couloir est constitué de deux parois latérales en béton placées l'une en face de l'autre (murs) comprenant une dalle de sol en béton ou en asphalte entre elles, sur laquelle l'aliment brut est stocké. Le silo est rempli du fourrage ensilé et compacté au maximum par écrasement avec un tracteur (ou un bulldozer). L'écrasement est effectué pour que l'oxygène dans le fourrage ensilé soit minimal. Pendant l'écrasement, des forces importantes sont exercées sur les parois latérales en béton, suite à quoi la stabilité et la résistance des parois sont très importantes. Après le remplissage, le silo est recouvert par une feuille en plastique imperméable à l'eau et l'ensemble est fermé de manière étanche à l'air.

Pour les parois latérales en béton, on peut opter pour des solutions en béton préfabriqué ou en béton coulé sur place. On opte principalement pour des éléments en béton préfabriqué car leur mise en place est beaucoup plus rapide, leur coût est plus bas et une qualité supérieure du béton peut être garantie. Un avantage supplémentaire des éléments en béton préfabriqué réside également dans le fait que ces éléments peuvent toujours être réutilisés ou déplacés ultérieurement. Parmi les solutions préfabriquées actuelles, on distingue pour l'instant principalement les éléments en L, en T & en U et les blocs en béton modulaires (de type 'blocs lego'). Ci-dessous, nous présentons brièvement les éléments existants.

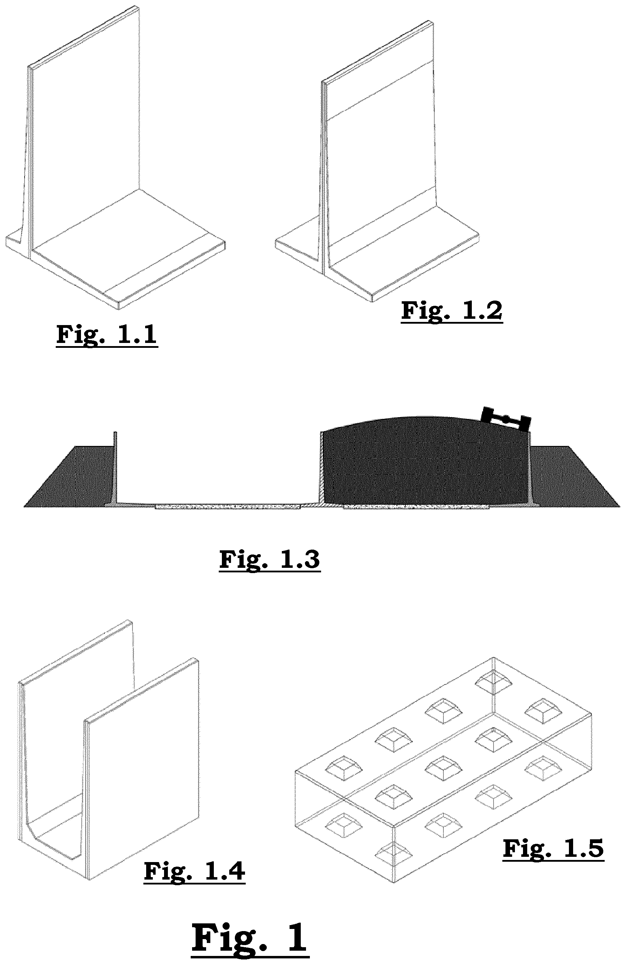

Pour les parois en L (cf. Fig. 1.1), on ne peut stocker que le long d'un côté alors que pour un élément en T (cf. Fig. 1.2), on peut stocker le long des deux côtés. L'inconvénient des deux éléments réside dans le fait que lorsqu'ils sont placés sur une dalle de sol déjà coulée, le pied de l'élément forme un obstacle lors du désensilage. Pour cette raison, on opte principalement pour le coulage de la dalle de sol, comme proposé dans la Fig. 1.3, jusqu'à contre le pied de telle sorte que le côté supérieur de la dalle de sol se trouve au même niveau que le côté supérieur du pied. Un inconvénient supplémentaire de ces éléments réside dans le fait qu'en raison de leur épaisseur de paroi mince (10 à 15 cm), il est difficile de marcher sur ces murs, par exemple lors de la fermeture et de l'ouverture du silo. Pour les parois latérales avec des éléments de type L, ce problème peut encore être résolu par l'agencement d'un talus le long du mur. Ceci est toutefois impossible pour des parois intermédiaires entre deux silos avec des éléments de type T.

Un élément qui répond à ces défauts est ce qu'on appelle un élément en U (cf. Fig. 1.4). Un tel élément en U est principalement utilisé comme paroi intermédiaire en remplacement d'un élément en T et présente comme grand avantage que le silo est beaucoup plus accessible. De plus, un élément en U ne présente pas de pied qui gêne lors du désensilage. Pour un élément en U, l'intérieur est rempli à raison d'environ 2/3 par de la terre pour offrir une stabilité suffisante et comme accès au silo.

L'inconvénient d'un élément en U réside dans le prix. Vu que cet élément est lourd, les coûts de transport sont élevés et en raison de sa forme, une armature importante doit être prévue.

Une autre solution éventuelle réside dans les blocs en béton modulaires ou ce qu'on appelle les blocs 'lego' (cf. Fig. 1.5). Il s'agit de blocs en béton massifs qui sont placés les uns sur les autres selon un assemblage en panneresse et qui sont assemblés grâce aux tenons sur la face supérieure et aux évidements correspondants sur la face inférieure. Ces blocs sont fabriqués en béton non armé mais sont cependant stables par le poids de la construction. Un inconvénient de ce système réside dans le coût élevé dû aux coûts de transport élevés ainsi que dans les nombreux joints en béton. Une paroi de silo doit être fermée complètement de manière étanche à l'air, afin d'éviter que de l'oxygène entre en contact avec le fourrage ensilé. Pour cette raison, tous les joints en béton sont étanchéifiés par un mastic d'étanchéité approprié. Ces éléments présentent cependant un nombre de joints tellement élevé qu'une construction étanche à l'air ne peut pas être garantie.

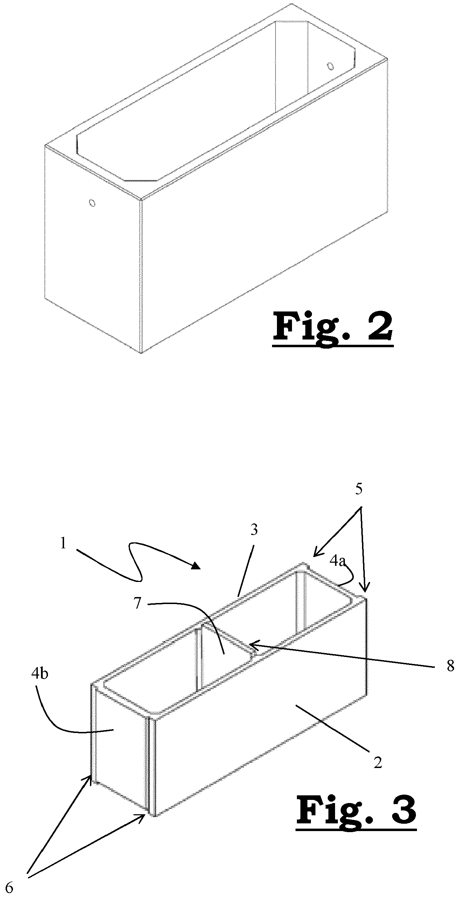

Depuis quelques années, un nouveau système qu'on peut plutôt considérer comme une combinaison d'éléments de type U et de blocs en béton modulaires est sur le marché. Il s'agit de blocs en béton creux (cf. Fig. 2) qui sont d'abord placés les uns sur les autres puis remplis de terre. Les avantages résident dans le fait qu'aucun pied ne gêne pendant le désensilage, que le mur est suffisamment large de telle sorte que le silo est accessible, que les blocs sont creux de telle sorte que les coûts de transport ne sont pas trop élevés et que les blocs sont plus grands de telle sorte que moins de joints doivent être colmatés entre les éléments. Les inconvénients de ces éléments résident toutefois dans le fait qu'en raison de leur forme, leur empilement est plus compliqué et que, après la mise en place, ils peuvent coulisser plus facilement les uns par rapport aux autres. Les éléments sont simplement empilés de telle sorte que les blocs empilés sont moins stables et on ne peut donc stocker que sur une hauteur inférieure et l'écrasement ne peut pas être effectué par des tracteurs lourds (bulldozers). Un silo couloir conforme au préambule de la revendication 1 est divulgué dans FR 1 264 628 A.

Le problème de la présente invention concerne donc un silo couloir construit à partir de blocs de construction empilables, lesquels blocs de construction peuvent être empilés facilement et permettent de former une paroi stable de silo couloir.

La solution de l'invention porte sur un silo couloir comprenant des blocs de construction conçus pour la formation d'une paroi du silo couloir, lesdits blocs de construction comprenant un corps creux en forme de bloc pourvu d'une paroi avant, d'une paroi arrière et de deux parois latérales opposées l'une à l'autre, la première paroi latérale étant pourvue de moyens d'accouplement mâles et la deuxième paroi latérale opposée étant pourvue de moyens d'accouplement femelles présentant une forme complémentaire de telle sorte que les faces frontales de blocs de construction adjacents peuvent être assemblées l'une à l'autre par la mise en prise des moyens d'accouplement mâles dans les moyens d'accouplement femelles et le bloc de construction comprenant en outre une paroi intermédiaire qui s'étend entre la paroi avant et la paroi arrière et dont la face supérieure présente une nervure de maintien saillante destinée à se placer contre une surface latérale frontale d'un bloc de construction sus-jacent. Les blocs de construction présentant cette forme peuvent être empilés plus facilement grâce à la présence des nervures de maintien qui forment un appui pour un bloc de construction sus-jacent. La nervure de maintien se placera contre la zone de la surface latérale frontale d'un bloc de construction sus-jacent qui s'étend entre les moyens d'accouplement mâles ou femelles. Les moyens d'accouplement mâles et femelles sont de préférence réalisés sous forme d'éléments complémentaires saillants et en retrait qui s'étendent en particulier au niveau des bords externes des parois latérales et plus particulièrement sur toute la hauteur des parois latérales. Les blocs de construction pour le silo couloir, de préférence pour une paroi du silo couloir, selon l'invention sont destinés à être empilés selon un assemblage en panneresse, les nervures de maintien assurant que des blocs placés les uns au-dessus des autres ne peuvent plus coulisser les uns par rapport aux autres vu qu'un bloc de construction sus-jacent est positionné entre les nervures de maintien de deux blocs de construction sous-jacents.

Les blocs de construction sont remplis d'un matériau de remplissage approprié, de préférence drainant, après leur mise en place. On forme ainsi une paroi de silo couloir solide et stable.

Les modes de réalisation préférés du silo couloir selon l'invention sont décrits dans les revendications dépendantes.

La présente invention concerne en outre l'utilisation des blocs de construction concernés pour la formation d'une paroi de silo couloir telle que décrite dans la revendication indépendante concernée. Les blocs de construction concernés sont de préférence réalisés comme décrit dans au moins l'une quelconque des revendications 1 à 8.

Pour expliquer davantage les propriétés de l'invention et pour indiquer des avantages et des particularités supplémentaires de celle-ci, une description plus détaillée du silo couloir selon l'invention et du bloc de construction mis en oeuvre est indiquée ci-après. Il est clair que rien dans la description ci-après ne peut être interprété comme une limitation de la protection revendiquée dans les revendications pour cette invention.

La description fait référence au moyen de chiffres de référence aux dessins en annexe, qui représentent :
- ***figure 1*** ***:** un certain nombre de modes de réalisation (**Fig. 1.1* à 1.5) tels que *connus par l'état de la technique pour la formation d'une paroi d'un silo couloir ;*
- ***figure 2*** ***:** un mode de réalisation d'un bloc de construction creux connu par l'état de la technique ;*
- ***figure 3*** ***:** une représentation en perspective d'un bloc de construction destiné à être utilisé dans un silo couloir selon l'invention ;*
- ***figure 4*** ***:** une représentation d'un certain nombre de blocs de construction adjacents et empilés destinés à être utilisés dans un silo couloir selon l'invention* ;
- ***figure 5*** ***:** une coupe transversale de la représentation de la* *figure 4* *;*
- ***figure 6*** ***:** une représentation de détail de la zone A entourée dans la* *figure 5* *;*
- ***figure 7*** ***:** une représentation de détail de la zone B entourée dans la* *figure 5* *;*
- ***figure 8*** ***:** une représentation en perspective d'un silo couloir selon l'invention comprenant deux parois de silo couloir placées parallèlement l'une à côté de l'autre ;*
- ***figure 9*** ***:** une représentation en perspective d'un autre mode de réalisation éventuel d'un silo couloir selon l'invention comprenant deux parois de silo couloir placées parallèlement l'une à côté de l'autre.*

La présente invention concerne un silo couloir, plus particulièrement une paroi d'un silo couloir construit à partir de blocs de construction (1) empilables, les blocs de construction étant réalisés de manière telle qu'ils permettent l'assemblage aisé de différentes rangées de blocs de construction (1) identiques de telle sorte que ceux-ci forment un tout et que la stabilité de la paroi d'un silo couloir n'est pas compromise et ce sans nécessiter de matériaux supplémentaires pour assembler les blocs de construction (1) les uns aux autres. Pour les systèmes connus, des matériaux d'assemblage supplémentaires (comme par exemple des boulons et des écrous) doivent principalement être coulés dans le béton ou un forage doit encore être réalisé dans le béton sur place. L'élimination de ces matériaux d'assemblage entraîne un gain de temps énorme lors de la mise en place et évite des problèmes dans la production.

Pour l'assemblage des rangées, celles-ci doivent donc être attachées les unes aux autres par l'intermédiaire d'une espèce d'assemblage 'dent-rainure' entre les éléments en béton. Ceci n'est cependant pas simple pour différentes raisons :
- les blocs sont creux ;
- les parois ne présentent pas une épaisseur de paroi constante car ceci est nécessaire pour le décoffrage de ces éléments ;
- les parois ne peuvent pas être trop épaisses en raison du coût de transport ;
- la paroi externe des éléments doit rester plane afin d'éviter tout accrochage lors du désensilage ;
- d'un point de vue technique de production, le décoffrage est associé à différentes limitations, également dues au fait que l'élément doit toujours être coulé le long d'une face (face de coulage).

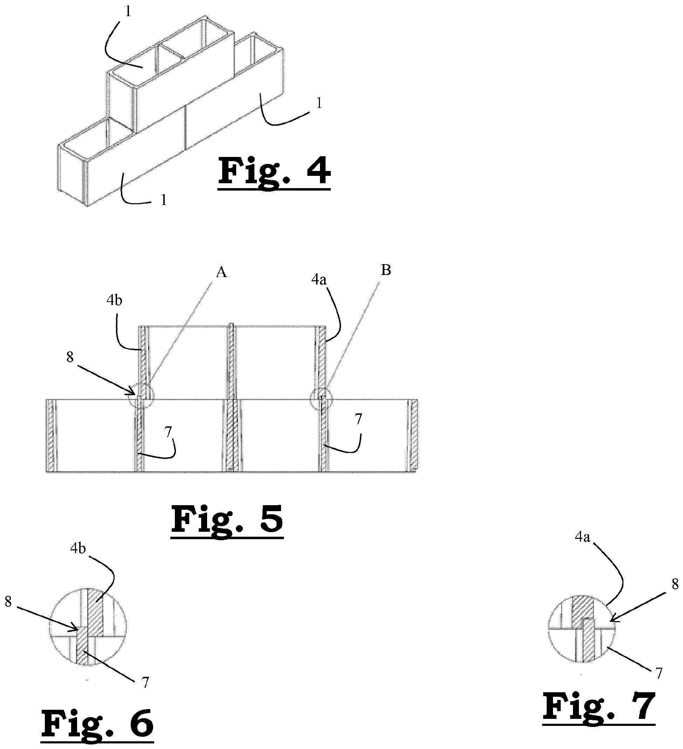

Le bloc de construction (1) pour un silo couloir (9), de préférence pour une paroi (10) de silo couloir, selon la présente invention et tel que représenté dans la figure 3 est un corps creux en forme de bloc en béton présentant une paroi avant (2), une paroi arrière (3) et deux parois latérales opposées l'une à l'autre (4a et 4b). Pour assembler des blocs de construction (1) adjacents, les parois latérales concernées sont pourvues de moyens d'accouplement mâles et femelles complémentaires. Dans les modes de réalisation représentés du bloc de construction (1) selon l'invention, la première paroi latérale (4a) est pourvue, au niveau de ses bords externes, d'éléments saillants (5) qui forment les moyens d'accouplement mâles et la deuxième paroi latérale opposée (4b) est pourvue, au niveau de ses bords externes, d'éléments en retrait (6), qui forment les moyens d'accouplement femelles, présentant une forme complémentaire, de telle sorte que les faces frontales de blocs de construction (1) adjacents, comme illustré dans la figure 4, peuvent être assemblées l'une à l'autre par mise en prise des éléments saillants (5) dans les éléments en retrait (6). Les éléments qui sont placés sur la même rangée sont assemblés par l'intermédiaire d'un assemblage dent-rainure. En d'autres termes, une face des côtés frontaux présente une rainure et l'autre côté présente une dent.

Le bloc de construction (1) comprend en outre une paroi intermédiaire (7) qui s'étend au niveau du centre entre la paroi avant (2) et la paroi arrière (3). La face supérieure de la paroi intermédiaire (7) comprend une nervure de maintien (8) (nervure de renforcement) s'étendant au-delà de la surface supérieure du bloc de construction. La nervure de maintien se placera contre la zone de la surface latérale frontale d'un bloc de construction sus-jacent qui s'étend entre les éléments saillants (5) ou en retrait (6) du bloc de construction (1) concerné. Un avantage supplémentaire réside dans le fait que les blocs peuvent être réalisés plus longs, grâce à la présence de la paroi intermédiaire (7), sans agrandir l'épaisseur de paroi, ce qui diminue également le nombre de joints en béton dans le silo. Les blocs de construction mis en oeuvre présentent en standard une longueur entre 1 m et 4 m.

Pour réaliser l'assemblage avec la rangée sus-jacente, la nervure de maintien (8) s'étend au-delà de la surface supérieure du bloc de construction (1). Cet élément saillant est destiné à se placer, lors de l'utilisation, contre une surface latérale frontale d'un bloc de construction sus-jacent. De cette manière - comme montré dans les figures 5 à 7 - un bloc de construction sus-jacent est positionné (piégé ou logé) entre les nervures de maintien (8) de deux blocs de construction sous-jacents. On peut ainsi construire une paroi d'un silo dont les blocs de construction ne coulissent plus. Par ce mode de mise en place des blocs, l'assemblage en panneresse est également respecté et aucune prise de dimension n'est nécessaire sur le chantier.

Le bloc de construction (1) selon l'invention est de préférence fabriqué en béton et présente une longueur située entre 1 m et 4 m, une hauteur située entre 50 cm et 200 cm et une largeur située entre 80 cm et 200 cm. Les différentes parois, entre autres également la paroi intermédiaire, présentent une épaisseur de paroi de 8 cm à 15 cm.

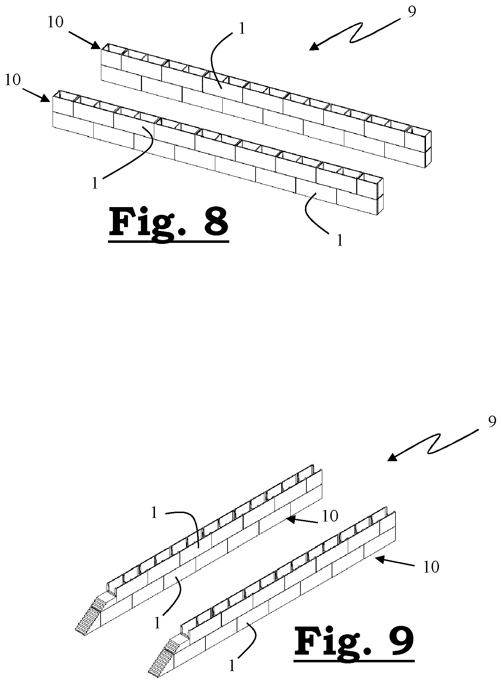

Les figures 8 et 9 représentent chacune un mode de réalisation éventuel d'un silo couloir (9) selon l'invention. Le silo couloir (9) représenté comprend deux parois (10) (murs) de silo couloir placées l'une en face de l'autre qui sont chacune formées à partir d'au moins un certain nombre de blocs de construction (1) placés selon un assemblage en panneresse. Les blocs de construction (1) concernés comprennent un corps creux en forme de bloc pourvu d'une paroi avant (2), d'une paroi arrière (3) et de deux parois latérales opposées l'une à l'autre (4a ; 4b), la première paroi latérale (4a) étant pourvue de moyens d'accouplement mâles et la deuxième paroi latérale (4b) opposée étant pourvue de moyens d'accouplement femelles présentant une forme complémentaire de telle sorte que les faces frontales de blocs de construction (1) adjacents peuvent être assemblées l'une à l'autre par la mise en prise des moyens d'accouplement mâles dans les moyens d'accouplement femelles et le bloc de construction (1) comprenant en outre une paroi intermédiaire (7) qui s'étend entre la paroi avant (2) et la paroi arrière (3) et dont la face supérieure présente une nervure de maintien (8) saillante destinée à se placer contre une surface latérale frontale d'un bloc de construction sus-jacent.

## Revendications

1. Silo couloir (9) comprenant des blocs de construction (1) conçus pour la formation d'une paroi (10) du silo couloir (9), lesdits blocs de construction (1) comprennent un corps creux en forme de bloc pourvu d'une paroi avant (2), d'une paroi arrière (3) et de deux parois latérales opposées l'une à l'autre (4a ; 4b), la première paroi latérale (4a) étant pourvue de moyens d'accouplement mâles et la deuxième paroi latérale (4b) opposée étant pourvue de moyens d'accouplement femelles présentant une forme complémentaire de telle sorte que les faces frontales de blocs de construction (1) adjacents peuvent être assemblées l'une à l'autre par la mise en prise des moyens d'accouplement mâles dans les moyens d'accouplement femelles, le bloc de construction (1) comprenant en outre une paroi intermédiaire (7) qui s'étend entre la paroi avant (2) et la paroi arrière (3) **caractérisé en ce que** la face supérieure de la paroi intermédiaire présente une nervure de maintien (8) saillante destinée à se placer contre une surface latérale frontale d'un bloc de construction sus-jacent.

2. Silo couloir (9) selon la revendication 1, **caractérisé en ce que** la nervure de maintien desdits blocs de construction (1) s'étend au-delà de la surface supérieure du bloc de construction (1).

3. Silo couloir (9) selon la revendication 1 ou 2, **caractérisé en ce que** la paroi intermédiaire (7) desdits blocs de construction (1) s'étend au centre du bloc de construction (1).

4. Silo couloir (9) selon l'une quelconque des revendications précédentes, **caractérisé en ce que** les moyens d'accouplement mâles sont réalisés sous forme d'éléments saillants (5) et les moyens d'accouplement femelles sont réalisés sous forme d'éléments en retrait (6) présentant une forme complémentaire, de telle sorte que les faces frontales de blocs de construction (1) adjacents peuvent être assemblées l'une à l'autre par mise en prise des éléments saillants (5) dans les éléments en retrait (6).

5. Silo couloir (9) selon la revendication 4, **caractérisé en ce que** la nervure de maintien (8) est destinée à se placer contre la surface latérale frontale qui s'étend entre les éléments saillants (5) ou en retrait (6) d'un bloc de construction (1) sus-jacent.

6. Silo couloir (9) selon l'une quelconque des revendications précédentes, **caractérisé en ce que** le bloc de construction (1) présente une longueur située entre 1 mètre et 4 mètres, une hauteur située entre 50 cm et 200 cm et une largeur située entre 80 cm et 200 cm.

7. Silo couloir (9) selon l'une quelconque des revendications précédentes, **caractérisé en ce que** le bloc de construction (1) est fabriqué en béton.

8. Silo couloir (9) selon l'une quelconque des revendications précédentes, **caractérisé en ce que** les parois du bloc de construction (1) présentent une épaisseur de paroi de 8 cm à 15 cm.

9. Utilisation d'un bloc de construction (1) comprenant un corps creux en forme de bloc pourvu d'une paroi avant (2), d'une paroi arrière (3) et de deux parois latérales opposées l'une à l'autre (4a ; 4b), ledit bloc de construction étant utilisé pour la formation d'une paroi (10) d'un silo couloir (9), la première paroi latérale (4a) étant pourvue de moyens d'accouplement mâles et la deuxième paroi latérale (4b) opposée étant pourvue de moyens d'accouplement femelles présentant une forme complémentaire de telle sorte que les faces frontales de blocs de construction (1) adjacents peuvent être assemblées l'une à l'autre par la mise en prise des moyens d'accouplement mâles dans les moyens d'accouplement femelles, le bloc de construction (1) comprenant en outre une paroi intermédiaire (7) qui s'étend entre la paroi avant (2) et la paroi arrière (3) **caractérisé en ce que** la face supérieure de la paroi intermédiaire présente une nervure de maintien (8) saillante destinée à se placer contre une surface latérale frontale d'un bloc de construction sus-jacent.

## Patentansprüche

1. Fahrsilo (9) mit Baublöcken (1), die für die Bildung einer Wand (10) des Fahrsilos (9) ausgelegt sind, wobei die Baublöcke (1) einen blockförmigen Hohlkörper umfassen, der mit einer Vorderwand (2), einer Rückwand (3) und zwei einander gegenüberliegenden Seitenwänden (4a; 4b) versehen ist, wobei die erste Seitenwand (4a) mit männlichen Kopplungsmitteln versehen ist und die gegenüberliegende zweite Seitenwand (4b) mit weiblichen Kopplungsmitteln versehen ist, die eine komplementäre Form aufweisen, sodass die Vorderseiten benachbarter Baublöcke (1) durch den Eingriff der männlichen Kopplungsmittel in die weiblichen Kopplungsmittel miteinander verbunden werden können, wobei der Baublock (1) ferner eine Zwischenwand (7) umfasst, die sich zwischen der Vorderwand (2) und der Rückwand (3) erstreckt, **dadurch gekennzeichnet, dass** die Oberseite der Zwischenwand eine vorstehende Halterippe (8) aufweist, die dazu bestimmt ist, an einer vorderen Seitenfläche eines darüberliegenden Baublocks anzuliegen.

2. Fahrsilo (9) nach Anspruch 1, **dadurch gekennzeichnet, dass** sich die Halterippe der Baublöcke (1) über die obere Fläche des Baublocks (1) hinaus erstreckt.

3. Fahrsilo (9) nach Anspruch 1 oder 2, **dadurch gekennzeichnet, dass** sich die Zwischenwand (7) der Baublöcke (1) in der Mitte des Baublocks (1) erstreckt.

4. Fahrsilo (9) nach einem der vorangehenden Ansprüche, **dadurch gekennzeichnet, dass** die männlichen Kopplungsmittel in Form von vorstehenden Elementen (5) ausgeführt sind und die weiblichen Kopplungsmittel in Form von zurückstehenden Elementen (6) ausgeführt sind, die eine komplementäre Form aufweisen, sodass die Vorderseiten benachbarter Baublöcke (1) durch den Eingriff der vorstehenden Elemente (5) in die zurückstehenden Elemente (6) miteinander verbunden werden können.

5. Fahrsilo (9) nach Anspruch 4, **dadurch gekennzeichnet, dass** die Halterippe (8) dazu bestimmt ist, an der vorderen Seitenfläche anzuliegen, die sich zwischen den vorstehenden Elementen (5) oder den zurückstehenden Elementen (6) eines darüberliegenden Baublocks (1) erstreckt.

6. Fahrsilo (9) nach einem der vorangehenden Ansprüche, **dadurch gekennzeichnet, dass** der Baublock (1) eine Länge zwischen 1 Meter und 4 Metern, eine Höhe zwischen 50 cm und 200 cm und eine Breite zwischen 80 cm und 200 cm aufweist.

7. Fahrsilo (9) nach einem der vorangehenden Ansprüche, **dadurch gekennzeichnet, dass** der Baublock (1) aus Beton gefertigt ist.

8. Fahrsilo (9) nach einem der vorangehenden Ansprüche, **dadurch gekennzeichnet, dass** die Wände der Baublöcke (1) eine Wandstärke von 8 cm bis 15 cm aufweisen.

9. Verwendung eines Baublocks (1) mit einem blockförmigen Hohlkörper, der mit einer Vorderwand (2), einer Rückwand (3) und zwei einander gegenüberliegenden Seitenwänden (4a; 4b) versehen ist, wobei der Baublock zur Bildung einer Wand (10) eines Fahrsilos (9) verwendet wird, wobei die erste Seitenwand (4a) mit männlichen Kopplungsmitteln versehen ist und die gegenüberliegende zweite Seitenwand (4b) mit weiblichen Kopplungsmitteln versehen ist, die eine komplementäre Form aufweisen, sodass die Vorderseiten benachbarter Baublöcke (1) durch den Eingriff der männlichen Kopplungsmittel in die weiblichen Kopplungsmittel miteinander verbunden werden können, wobei der Baublock ferner eine Zwischenwand (7) umfasst, die sich zwischen der Vorderwand (2) und der Rückwand (3) erstreckt, **dadurch gekennzeichnet, dass** die Oberseite der Zwischenwand eine vorstehende Halterippe (8) aufweist, die dazu bestimmt ist, an einer vorderen Seitenfläche eines darüberliegenden Baublocks anzuliegen.

## Claims

1. Bunker silo (9) comprising building blocks (1) designed to form a wall (10) of the bunker silo (9), said building blocks (1) comprising a hollow body in the form of a block provided with a front wall (2), a rear wall (3) and two lateral walls opposite one another (4a; 4b), the first lateral wall (4a) being provided with male coupling means and the opposite second lateral wall (4b) being provided with female coupling means having a complementary shape such that the frontal faces of adjacent building blocks (1) can be assembled with one another by way of the male coupling means engaging in the female coupling means, the building block (1) further comprising an intermediate wall (7) that extends between the front wall (2) and the rear wall (3), **characterized in that** the upper face of the intermediate wall has a protruding retaining rib (8) that is intended to be placed against a frontal lateral surface of an overlying building block.

2. Bunker silo (9) according to Claim 1, **characterized in that** the retaining rib for retaining said building blocks (1) extends beyond the upper surface of the building block (1).

3. Bunker silo (9) according to Claim 1 or 2, **characterized in that** the intermediate wall (7) of said building blocks (1) extends through the centre of the building block (1).

4. Bunker silo (9) according to any one of the preceding claims, **characterized in that** the male coupling means are produced in the form of protruding elements (5) and the female coupling means are produced in the form of recessed elements (6) having a complementary shape, such that the frontal faces of adjacent building blocks (1) can be assembled with one another by way of the protruding elements (5) engaging in the recessed elements (6) .

5. Bunker silo (9) according to Claim 4, **characterized in that** the retaining rib (8) is intended to be placed against the frontal lateral surface that extends between the protruding elements (5) or recessed elements (6) of an overlying building block (1).

6. Bunker silo (9) according to any one of the preceding claims, **characterized in that** the building block (1) has a length between 1 metre and 4 metres, a height between 50 cm and 200 cm, and a width between 80 cm and 200 cm.

7. Bunker silo (9) according to any one of the preceding claims, **characterized in that** the building block (1) is manufactured from concrete.

8. Bunker silo (9) according to any one of the preceding claims, **characterized in that** the walls of the building block (1) have a wall thickness of 8 cm to 15 cm.

9. Use of a building block (1) comprising a hollow body in the form of a block provided with a front wall (2), a rear wall (3) and two lateral walls opposite one another (4a; 4b), said building block being used to form a wall (10) of a bunker silo (9), the first lateral wall (4a) being provided with male coupling means and the opposite second lateral wall (4b) being provided with female coupling means having a complementary shape such that the frontal faces of adjacent building blocks (1) can be assembled with one another by way of the male coupling means engaging in the female coupling means, the building block further comprising an intermediate wall (7) that extends between the front wall (2) and the rear wall (3), and **characterized in that** the upper face of the intermediate wall has a protruding retaining rib (8) that is intended to be placed against a frontal lateral surface of an overlying building block.
